# EUROPEAN PATENT SPECIFICATION

(11) **EP 1 520 393 B1**
(45) Date of publication and mention of the grant of the patent: **07.11.2007**
(21) Application number: 03764074.5
(22) Date of filing: 08.07.2003
(51) Int. Cl.: H04L 29/06, H04Q 7/38

(54) **A METHOD FOR SETTING UP A SECURITY ASSOCIATION**
VERFAHREN ZUM EINRICHTEN EINER SICHERHEITSASSOZIATION
PROCEDE D'ETABLISSEMENT D'UNE ASSOCIATION DE SECURITE

(30) Priority: 10.07.2002 GB 0216000
(43) Date of publication of application: 06.04.2005
(73) Proprietor: Nokia Corporation, 02150 Espoo (FI)
(72) Inventor: GABOR, Bajko, Budapest (HU); HAUKKA, Tao, FIN-90580 Oulu (FI)
(74) Representative: Williams, David John
(86) International application number: PCT/IB2003/003317
(87) International publication number: WO 2004/008712

(56) References cited:
- WO-A1-02/09387
- WO-A1-02/32170
- WO-A1-03/030488
- NARTEN T. ET AL.: 'RFC 3041 (RFC3041), Privacy extensions for stateless address autoconfigur' MICROSOFT RESEARCH January 2001, pages 1 - 17, XP002181525
- ARKKO J. ET AL.: 'Security mechanism agreement for SIP sessions', [Online] 28 February 2002, 13 PAGES, XP002979434 Retrieved from the Internet: <URL:http://www.globecom.net/ietf/draft-ark ko-sip-sec-agree-01.html> [retrieved on 2003-10-07]

## Description

### The field of the invention

The present invention relates to a method and a system for setting up a security association.

### Background to the invention

A communication system can be seen as a facility that enables communication between two or more entities such as user equipment and/or other nodes associated with the system. The communication may comprise, for example, communication of voice, data, multimedia and so on.

A communication system typically operates in accordance with a given standard or specification which sets out what the various elements of the system are permitted to do and how that should be achieved. For example, the standard or specification may define if the user, or more precisely, user equipment or terminal is provided with a circuit switched service and/or a packet switched service. Communication protocols and/or parameters which shall be used for the connection may also be defined. In other words, a specific set of "rules" on which the communication can be based on needs to be defined to enable communication by means of the system.

Communication systems proving wireless communication for user terminals or other nodes are known. An example of the wireless systems is a cellular network. In cellular systems, a base transceiver station (BTS) or similar access entity serves mobile stations (MS) or similar user equipment (UE) via a wireless interface between these entities. The operation of the apparatus required for the communication can be controlled by one or several control entities. The various control entities may be interconnected. One or more gateway nodes may also be provided for connecting the cellular network to other networks, such as to another cellular system or to a public switched telephone network (PSTN) and/or other communication networks such as an IP (Internet Protocol) and/or other packet switched networks. The communication between the user equipment and the elements of the communication network can be based on an appropriate communication protocol such as the session initiation protocol (SIP).

For example, in the current third generation (3G) multimedia network architectures it is assumed that various servers are used for handling different functions. These include functions such as call state control functions (CSCFs). A call state control function entity may provide functions such as proxy call state control (P-CSCF), interrogating call state control (I-CSCF), and serving call state control (S-CSCF). The serving call state control function can be divided further between originating call state control function (O-CSCF) and terminating call state control function (T-CSCF) at the originating and terminating ends of a session, respectively. Control functions may also be provided by entities such as a home subscriber server (HSS) and various application servers.

It shall be appreciated that the term "session" refers to any communication a user may have such as to a call, data (e.g. web browsing) or multimedia communication and so on.

The wireless communication network and internet network technology are gradually converging to make the packet switched data services used in the internet available to mobile users. Initially, the technology developed for the internet has primarily been designed for desk top computers and medium to high band width data connections. In contrast, the mobile terminal environments are generally characterised by less band width and smaller connection stability in comparison to the fixed networks. Additionally, terminals have tended to have smaller displays, less memory and less powerful processors as compared to desk top computers or the like.

However, IP (internet protocol) base packet services which are usable in a wireless mobile environment are being developed at an increasing rate. This is partly due to demand by users of mobile terminals and partly due to the development of new technologies which are attempting to increase the available band width, improve quality of service and data security. The new standards which are being developed include GPRS (general packet radio service), UMTS (universal mobile telecommunications system) and WLAN (Wireless Local Area Network). These are by way of example only. The GPRS standard aims to provide high quality services for GSM subscribers by efficiently using the GSM infrastructure and protocols. In addition, the GPRS radio services is designed to provide packet based services. WLAN standards (e.g. IEEE 802.11 and HiperLAN) define a Ethernet-like network that uses radio waves instead of cables.

One issue which needs to be addressed in communication networks relates to security and mobility. Mobility, for example when a mobile station moves from one cell to the next or from one network to another, or even from one service provider to another, requires the address of the mobile station to change. On the other hand, security requires the address of the mobile station to be identified reliably.

Reference is made to the IETF (internet engineering task force) standard RFC2401 which sets out the security architecture for the internet protocol. In this standard, various security services for traffic at the IP (internet protocol) layer both in IPv4 and IPv6 environments is set out. IPSec or IP security defined in this IETF standard is designed to provide interoperable, high quality, cryptographically based security for IPv4 and IPv6. The set of security services offered include access control, connectionless integrity, data origin authentication, protection against replays, confidentiality (ie encryption) and limited traffic flow confidentiality. These services are provided at the IP layer.

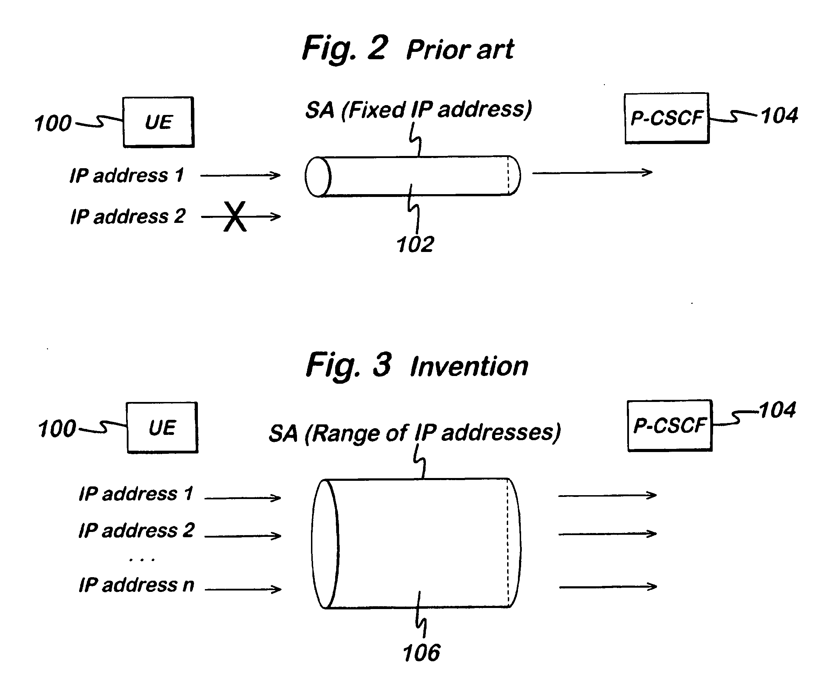

Reference is made to a third generation IMS domain. During the registration procedure the security association SA parameters are exchanged in order to establish an IPSec SA (internet protocol security association). If the SA selectors are set to the actual IP address of the UE user equipment, when the UE generates a new IP address it will need to re-register and re-establish the SA. This is far too complicated and need to be simplified. Reference is made to Figure 2 which illustrates this. The user equipment 100 has an IP address and associated with that one IP address a security association 102. The security association 102 is between the user equipment 100 and proxy CSCF 104. When the user equipment changes its IP address as will happen from time to time, a new security association needs to be established.

It has been proposed that when a UE changes its IP address, e.g. by using the method described in RFC 3041 which is attached as annexe A, then the UE shall delete the existing SA and initiate an unprotected registration procedure using the new IP address as the source IP address in the packets carrying the REGISTER messages. This however has the disadvantage that this complicates the SA management in the P-CSCF, as there might be ongoing sessions etc. when the need may arise at the UE to delete the current SA and set up a new one.

### Summary of the invention

It is an aim of embodiments of the present invention to address the problem discussed above.

According to a first aspect of the present invention, there is provided a method to set up a security association between a first node and a second node in a packet switched system, comprising the steps of:
forwarding a prefix value from the first node to the second node, said prefix value referring to a portion of the IP address associated with the first node; and
creating a security association between the first node and the second node based on the prefix value.

According to a second aspect of the present invention, there is provided a system comprising a first node and a second node in a packet switched system, wherein the first node is arranged to forward its prefix value in a message to the second node, said prefix value referring to a portion of the IP address of the first node, and wherein the second node is arranged to create a security association with the first node based on the prefix value.

Embodiments of the invention may use an additional parameter to be exchanged during the registration procedure. The parameter may be part of the Security-Client header field defined in draft-ietf-sip-sec-agree (which is incorporated as Annexe B)

### Brief description of drawings

For a better understanding of the present invention and as to how the same may be carried into effect, reference will now be made by way of example only to the accompanying drawings in which:
Figure 1 shows schematically a system with which embodiments of the present invention may be used;
Figure 2 illustrates schematically the prior art;
Figure 3 illustrates schematically an embodiment of the present invention.

### Detailed description of preferred embodiments of the present invention

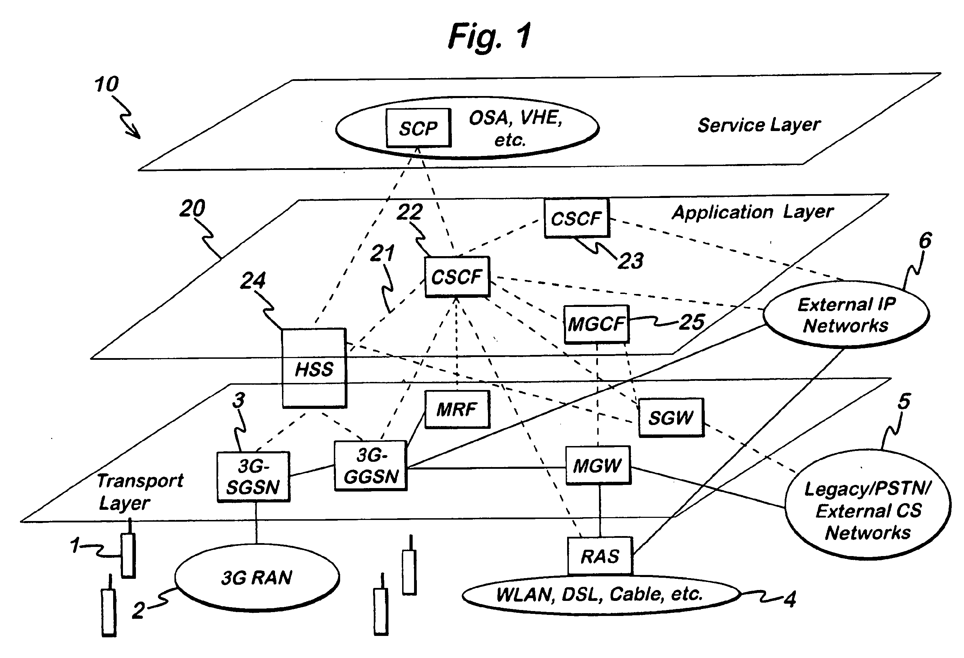

Reference is first made to Figure 1 which shows a possible network architecture wherein the present invention may be embodied. The exemplifying network system 10 is arranged in accordance with UMTS 3G specifications. The cellular system 10 is divided between a radio access network (RAN) 2 and a core network (CN).

In general terms, it is possible to describe a communication system as a model in which the functions of the system are divided in several hierarchically arranged function layers. Figure 1 shows three different function layers, i.e. a service layer, an application layer and a transport layer and the positioning of various network elements relative to these layers. It shall be appreciated that the layered model is shown only in order to illustrate the relationships between the various functions of a data communication system. In a physical i.e. real implementation the entities (e.g. servers or other nodes) are typically not arranged in a layered manner.

A plurality of user equipment 1 is served by a 3G radio access network (RAN) 2 over a wireless interface. The user equipment is enabled to move relative to the access entity, and may thus be referred to by the term mobile station. The radio access network function is hierarchically located on the transport layer. It shall be appreciated that although Figure 1 shows only one radio access network for clarity reasons, a typical communication network system comprises a number of radio access networks.

The 3G radio access network (RAN) 2 is shown to be physically connected to a serving general packet radio service support node (SGSN) entity 3. The SGSN 3 is a part of the core network. In the functional model the entity 3 belongs to the transport layer. The operation of a typical cellular network and the various transport level entities thereof is known by the skilled person and will thus not be explained in more detail herein.

An application layer 20 is shown to be located on top of the transport layer. The application layer 20 may include several application level functions. Figure 1 shows two call state control entities (CSCFs) 22 and 23. From these the call state server 22 is the so called serving call state control function (S-CSCF) wherein the user equipment 1 is registered to. That is, the server 22 is currently serving said user equipment 1 and is in control of the status of said user equipment.

The application layer is also shown to comprise a home subscriber server (HSS) entity 24. The home subscriber server (HSS) 24 is for storing data such as the registration identifiers (ID), their status (currently-registered-with-S-CSCF1 or currently-not-registered) and similar user related information.

For the sake of completeness some other elements such as various gateway entities (e.g. the Media Gateway Control Function MGCF, Media Gateway MGW and the Signalling Gateway SGW) are also shown. However, these do not form an essential part of the invention and will thus not be described in more detail.

The solid lines indicate actual data communication between various entities. The dashed lines indicate signalling traffic between various entities. The signalling is typically required for management and/or control functions, such as for registration, session set-up, charging and so on. As can be seen, user equipment 1 may have communication via the access network 2 and appropriate gateways with various other networks such as networks 4, 5 and 6. The other networks may be adapted to operate in accordance with the same standard as the network 10 or any other appropriate standard.

Reference is made to Figure 3 which shows the embodiment of the invention, In this arrangement the user equipment 100 has a security association with the security association 106. The security association 106 is between the user equipment and the proxy CSCF 104. In this embodiment of the invention, a range of IP addresses are associated with the security association.

The UE sends a REGISTER request towards the IMS network.

| |
|---|
| REGISTER sip:registrar.home1.net SIP/2.0 |
| Via: SIP/2.0/UDP [5555::aaa:bbb:ccc:ddd];branch=z9hG4bKnashds7 |
| Max-Forwards: 70 |
| From: <sip:user1_public1@home1.net>;tag=4fa3 |
| To: <sip:user1_public1@home1.net> |
| Contact: sip:[5555::aaa:bbb:ccc:ddd] |
| Call-ID: apb03a0s09dkjdfglkj49111 |
| Authorization: Digest username="user1_private@home1.net", |
| realm="registrar.home1.net", nonce="", uri="sip:registrar.home1.net", |
| response="" |
| |
| Security-Client: ipsec-man; alg=HMAC-SHA1; SPI_U_UDP=12345678; |
| SPI_U_TCP=23456789; Port_U_UDP=1357; Port_U_TCP=1358; **addr-pref-length=64** |
| |
| Require: sec-agree |
| CSeq: 1 REGISTER |
| Expires: 7200 |

| |
|---|
| Content-Length: 0 |

The prefix parameter is added into the Security-Client header and specifies the UE's wish to use a 64 bit prefix for the outgoing SA. Once the P-CSCF reads the header it will instruct the IPSec engine in the P-CSCF to set up the SAs towards the lPv6 prefix of the UE (e.g. 1234:abcd:5678::). In embodiments of the present the invention, the prefix length (also known as Subnet Mask in lPv4) the UE has got allocated is communicated, with the P-CSCF. The P-CSCF will then set up the SA towards the prefix of the UE's address, which will enable the UE to generate new IP addresses (within the prefix) for itself and send packets with that address inside the SA.

Embodiments of the present invention propose to use a new parameter in the Security-Client header. The name of the prefix may be 'addr-pref-length', and is inserted into the above-mentioned SIP header together with the other parameters needed for security association setup.

For a 3GPP IMS terminal the value of that parameter could either take the value 128 (meaning that the UE would like to have the outgoing SA towards towards the IMS network from its fixed IP address - i.e. the UE would not implement RFC3041 and would not make use of its benefits) or 64 (meaning that the UE would like to have the outgoing SA towards the IMS network from its prefix which was allocated to it by the GGSN). Once the UE specifies a prefix of 64 bits towards the P-CSCF, it may generate new IP addresses and send packets towards the IMS network with the newly generated IP addresses protected in the existing SA.

The addresses of the IP addresses associated with a security association can be of any suitable form. For example a range of addresses can be defined or information as to which addresses are usable or the like.

Thus the prefix value is either 128 (RFC3041 not used, SA for one IP address only) or a smaller value, preferably between 4 and 64 (RFC3041 is used, SA for a range of IP addresses) referring to a portion of the IP address that does not change. The prefix may form part of the address and an address containing that prefix may be used with the defined security association. The information provided by the prefix may be used to provide information to define the range of addresses. Other methods of defining the usable addresses may be used in embodiments of the invention.

In further development, the value of this parameter could take an arbitrary value, but for a 3GPP Rel5 compliant terminal only these two values are valid.

It should be appreciated that the values are by way of example and can take any other suitable form.

The solution described above would not require the UE to re-register each time it generates a new IP address. As a consequence, the UE would not be required to delete the existing SA and set up a new one towards its newly generated IP address.

In embodiments of the invention, the IPv6 prefix of the UE in the SA selectors is used instead of the fixed IP address. It is preferred but not essential that the choice of the selector be left to the UE, i.e. the UE will communicate its wish to the P-CSCF (IMS network).

The parameter embodying the invention is preferably part of the Security-Client header, those syntax allows for new parameters to be added there.

The UE is arranged to insert this parameter into the Security-Client header. If the parameter is present, the P-CSCF would instruct the IPSec engine to set up the SA either for the fixed IP address of the mobile or the prefix calculated from the fixed IP address (based on the value of the parameter).

Embodiments of the invention are such that the UE is able to send packets with different source IP addresses protected in the same SA.

One advantage of embodiments of the present invention is that when the UE changes its IP address using RFC3041 auto-configuration, there is no need to re-register (in order to create a new security association) with the proxy as the security association is valid for a range of IP addresses instead of one IP address only.

Without embodiments of the invention, any ongoing sessions should be dropped, and besides re-registration (which is not the only problem here), a new security association needs to be negotiated every time the UE performs auto-configuration.

If the proxy is informed about the prefix length that the UE uses, the SA can be agreed accordingly. The prefix itself is allocated by the GGSN and it is unique for the UE. Note, when prefix length equals 128 is indicated to the proxy, then only one IP address (the full current IP address) is used for the security association (i.e. no RFC3041 auto-configuration is implemented in UE). In this latter case, re-registration and new SA is needed when IP address changes.

The IETF (internet engineering task force) draft standard RFC 3041 incorporated as Annexe A below. This draft describes how to create an IP address consisting of a prefix and an interface identifier (IPv6 address is 128 bits total, prefix is usually 64, the rest is interface ID freely generated by the UE). In the IP Multimedia Subsystem (IMS), where embodiments of the invention may be implemented, the prefix is allocated by the GGSN (an access router in general), while the interface ID is generated by the UE. The UE is allowed to create new IP addresses by generating and adding new interface IDs to the prefix. The problem arises when there is no valid security association between the UE and the P-CSCF for the new IP addresses. The UE can use any address for communication, but only the address(es) with a valid security association will reach the P-CSCF, which is the first contact point towards the IMS. When the communication fails at the first contact point, a new registration is required using the new IP address. Any ongoing communication using the previous IP address will be released

### Annexe A

### Privacy Extensions for Stateless Address Autoconfiguration in lPv6

### Status of this Memo

This document specifies an Internet standards track protocol for the Internet community, and requests discussion and suggestions for improvements. Please refer to the current edition of the "Internet Official Protocol Standards" (STD 1) for the standardization state and status of this protocol. Distribution of this memo is unlimited.
Copyright Notice
Copyright (C) The Internet Society (2001). All Rights Reserved.
Abstract

Nodes use IPv6 stateless address autoconfiguration to generate addresses without the necessity of a Dynamic Host Configuration Protocol (DHCP) server. Addresses are formed by combining network prefixes with an interface identifier. On interfaces that contain embedded IEEE Identifiers, the interface identifier is typically derived from it. On other interface types, the interface identifier is generated through other means, for example, via random number generation. This document describes an extension to lPv6 stateless address autoconfiguration for interfaces whose interface identifier is derived from an IEEE identifier. Use of the extension causes nodes to generate global-scope addresses from interface identifiers that change over time, even in cases where the interface contains an embedded IEEE identifier. Changing the interface identifier (and the global-scope addresses generated from it) over time makes it more difficult for eavesdroppers and other information collectors to identify when different addresses used in different transactions actually correspond to the same node.

### 1. Introduction

Stateless address autoconfiguration [ADDRCONF] defines how an IPv6 node generates addresses without the need for a DHCP server. Some types of network interfaces come with an embedded IEEE Identifier (i.e., a link-layer MAC address), and in those cases stateless address autoconfiguration uses the IEEE identifier to generate a 64- bit interface identifier [ADDRARCH]. By design, the interface identifier is likely to be globally unique when generated in this fashion. The interface identifier is in turn appended to a prefix to form a 128-bit IPv6 address.

All nodes combine interface identifiers (whether derived from an IEEE identifier or generated through some other technique) with the reserved link-local prefix to generate link-local addresses for their attached interfaces. Additional addresses, including site-local and global-scope addresses, are then created by combining prefixes advertised in Router Advertisements via Neighbor Discovery [DISCOVERY] with the interface identifier.

Not all nodes and interfaces contain IEEE identifiers. In such cases, an interface identifier is generated through some other means (e.g., at random), and the resultant interface identifier is not globally unique and may also change over time. The focus of this document is on addresses derived from IEEE identifiers, as the concern being addressed exists only in those cases where the interface identifier is globally unique and non-changing. The rest of this document assumes that IEEE identifiers are being used, but the techniques described may also apply to interfaces with other types of globally unique and/or persistent identifiers. This document discusses concerns associated with the embedding of non-changing interface identifiers within lPv6 addresses and describes extensions to stateless address autoconfiguration that can help mitigate those concerns for individual users and in environments where such concerns are significant. Section 2 provides background information on the issue. Section 3 describes a procedure for generating alternate interface identifiers and global-scope addresses. Section 4 discusses implications of changing interface identifiers.

### 2. Background

This section discusses the problem in more detail, provides context for evaluating the significance of the concerns in specific environments and makes comparisons with existing practices.

### 2.1. Extended Use of the Same Identifier

The use of a non-changing interface identifier to form addresses is a specific instance of the more general case where a constant identifier is reused over an extended period of time and in multiple independent activities. Anytime the same identifier is used in multiple contexts, it becomes possible for that identifier to be used to correlate seemingly unrelated activity. For example, a network sniffer placed strategically on a link across which all traffic to/from a particular host crosses could keep track of which destinations a node communicated with and at what times. Such information can in some cases be used to infer things, such as what hours an employee was active, when someone is at home, etc.

One of the requirements for correlating seemingly unrelated activities is the use (and reuse) of an identifier that is recognizable over time within different contexts. IP addresses provide one obvious example, but there are more. Many nodes also have DNS names associated with their addresses, in which case the DNS name serves as a similar identifier. Although the DNS name associated with an address is more work to obtain (it may require a DNS query) the information is often readily available. In such cases, changing the address on a machine over time would do little to address the concerns raised in this document, unless the DNS name is changed as well (see Section 4).

Web browsers and servers typically exchange "cookies" with each other [COOKIES]. Cookies allow web servers to correlate a current activity with a previous activity. One common usage is to send back targeted advertising to a user by using the cookie supplied by the browser to identify what earlier queries had been made (e.g., for what type of information). Based on the earlier queries, advertisements can be targeted to match the (assumed) interests of the end-user.

The use of a constant identifier within an address is of special concern because addresses are a fundamental requirement of communication and cannot easily be hidden from eavesdroppers and other parties. Even when higher layers encrypt their payloads, addresses in packet headers appear in the clear. Consequently, if a mobile host (e.g., laptop) accessed the network from several different locations, an eavesdropper might be able to track the movement of that mobile host from place to place, even if the upper layer payloads were encrypted [SERIALNUM].

### 2.2. Address Usage in lPv4 Today

Addresses used in today's Internet are often non-changing in practice for extended periods of time, especially in non-home environments (e.g., corporations, campuses, etc.). In such sites, addresses are assigned statically and typically change infrequently. Over the last few years, sites have begun moving away from static allocation to dynamic allocation via DHCP [DHCP]. In theory, the address a client gets via DHCP can change over time, but in practice servers often return the same address to the same client (unless addresses are in such short supply that they are reused immediately by a different node when they become free). Thus, even within sites using DHCP, clients frequently end up using the same address for weeks to months at a time.

For home users accessing the Internet over dialup lines, the situation is generally different. Such users do not have permanent connections and are often assigned temporary addresses each time they connect to their ISP (e.g., AOL). Consequently, the addresses they use change frequently over time and are shared among a number of different users. Thus, an address does not reliably identify a particular device over time spans of more than a few minutes.

A more interesting case concerns always-on connections (e.g., cable modems, ISDN, DSL, etc.) that result in a home site using the same address for extended periods of time. This is a scenario that is just starting to become common in IPv4 and promises to become more of a concern as always-on internet connectivity becomes widely available. Although it might appear that changing an address regularly in such environments would be desirable to lessen privacy concerns, it should be noted that the network prefix portion of an address also serves as a constant identifier. All nodes at (say) a home, would have the same network prefix, which identifies the topological location of those nodes. This has implications for privacy, though not at the same granularity as the concern that this document addresses. Specifically, all nodes within a home would be grouped together for the purposes of collecting information. This issue is difficult to address, because the routing prefix part of an address contains topology information and cannot contain arbitrary values.

Finally, it should be noted that nodes that need a (non-changing) DNS name generally have static addresses assigned to them to simplify the configuration of DNS servers. Although Dynamic DNS [DDNS] can be used to update the DNS dynamically, it is not yet widely deployed. In addition, changing an address but keeping the same DNS name does not really address the underlying concern, since the DNS name becomes a non-changing identifier. Servers generally require a DNS name (so clients can connect to them), and clients often do as well (e.g., some servers refuse to speak to a client whose address cannot be mapped into a DNS name that also maps back into the same address). Section 4 describes one approach to this issue.

### 2.3. The Concern With lPv6 Addresses

The division of lPv6 addresses into distinct topology and interface identifier portions raises an issue new to lPv6 in that a fixed portion of an IPv6 address (i.e., the interface identifier) can contain an identifier that remains constant even when the topology portion of an address changes (e.g., as the result of connecting to a different part of the Internet). In IPv4, when an address changes, the entire address (including the local part of the address) usually changes. It is this new issue that this document addresses.

If addresses are generated from an interface identifier, a home user's address could contain an interface identifier that remains the same from one dialup session to the next, even if the rest of the address changes. The way PPP is used today, however, PPP servers typically unilaterally inform the client what address they are to use (i.e., the client doesn't generate one on its own). This practice, if continued in lPv6, would avoid the concerns that are the focus of this document.

A more troubling case concerns mobile devices (e.g., laptops, PDAs, etc.) that move topologically within the Internet. Whenever they move (in the absence of technology such as mobile IP [MOBILEIP]), they form new addresses for their current topological point of attachment. This is typified today by the "road warrior" who has Internet connectivity both at home and at the office. While the node's address changes as it moves, however, the interface identifier contained within the address remains the same (when derived from an IEEE Identifier). In such cases, the interface identifier can be used to track the movement and usage of a particular machine

[SERIALNUM]. For example, a server that logs usage information together with a source addresses, is also recording the interface identifier since it is embedded within an address. Consequently, any data-mining technique that correlates activity based on addresses could easily be extended to do the same using the interface identifier. This is of particular concern with the expected proliferation of next-generation network-connected devices (e.g., PDAs, cell phones, etc.) in which large numbers of devices are in practice associated with individual users (i.e., not shared). Thus, the interface identifier embedded within an address could be used to track activities of an individual, even as they move topologically within the internet.

In summary, IPv6 addresses on a given interface generated via Stateless Autoconfiguration contain the same interface identifier, regardless of where within the Internet the device connects. This facilitates the tracking of individual devices (and thus potentially users). The purpose of this document is to define mechanisms that eliminate this issue, in those situations where it is a concern.

### 2.4. Possible Approaches

One way to avoid some of the problems discussed above is to use DHCP for obtaining addresses. With DHCP, the DHCP server could arrange to hand out addresses that change over time.

Another approach, compatible with the stateless address autoconfiguration architecture, would be to change the interface id portion of an address over time and generate new addresses from the interface identifier for some address scopes. Changing the interface identifier can make it more difficult to look at the IP addresses in independent transactions and identify which ones actually correspond to the same node, both in the case where the routing prefix portion of an address changes and when it does not.

Many machines function as both clients and servers. In such cases, the machine would need a DNS name for its use as a server. Whether the address stays fixed or changes has little privacy implication since the DNS name remains constant and serves as a constant identifier. When acting as a client (e.g., initiating communication), however, such a machine may want to vary the addresses it uses. In such environments, one may need multiple addresses: a "public" (i.e., non-secret) server address, registered in the DNS, that is used to accept incoming connection requests from other machines, and a "temporary" address used to shield the identity of the client when it initiates communication. These two cases are roughly analogous to telephone numbers and caller ID, where a user may list their telephone number in the public phone book, but disable the display of its number via caller ID when initiating calls.

To make it difficult to make educated guesses as to whether two different interface identifiers belong to the same node, the algorithm for generating alternate identifiers must include input that has an unpredictable component from the perspective of the outside entities that are collecting information. Picking identifiers from a pseudo-random sequence suffices, so long as the specific sequence cannot be determined by an outsider examining information that is readily available or easily determinable (e.g., by examining packet contents). This document proposes the generation of a pseudo-random sequence of interface identifiers via an MD5 hash. Periodically, the next interface identifier in the sequence is generated, a new set of temporary addresses is created, and the previous temporary addresses are deprecated to discourage their further use. The precise pseudo-random sequence depends on both a random component and the globally unique interface identifier (when available), to increase the likelihood that different nodes generate different sequences.

### 3. Protocol Description

The goal of this section is to define procedures that:
1) Do not result in any changes to the basic behavior of addresses generated via stateless address autoconfiguration [ADDRCONF].
2) Create additional global-scope addresses based on a random interface identifier for use with global scope addresses. Such addresses would be used to initiate outgoing sessions. These "random" or temporary addresses would be used for a short period of time (hours to days) and would then be deprecated. Deprecated address can continue to be used for already established connections, but are not used to initiate new connections. New temporary addresses are generated periodically to replace temporary addresses that expire, with the exact time between address generation a matter of local policy.
3) Produce a sequence of temporary global-scope addresses from a sequence of interface identifiers that appear to be random in the sense that it is difficult for an outside observer to predict a future address (or identifier) based on a current one and it is difficult to determine previous addresses (or identifiers) knowing only the present one.
4) Generate a set of addresses from the same (randomized) interface identifier, one address for each prefix for which a global address has been generated via stateless address autoconfiguration. Using the same interface identifier to generate a set of temporary addresses reduces the number of IP multicast groups a host must join. Nodes join the solicited-node multicast address for each unicast address they support, and solicited-node addresses are dependent only on the low-order bits of the corresponding address. This decision was made to address the concern that a node that joins a large number of multicast groups may be required to put its interface into promiscuous mode, resulting in possible reduced performance.

### 3.1. Assumptions

The following algorithm assumes that each interface maintains an associated randomized interface identifier. When temporary addresses are generated, the current value of the associated randomized interface identifier is used. The actual value of the identifier changes over time as described below, but the same identifier can be used to generate more than one temporary address.

The algorithm also assumes that for a given temporary address, an implementation can determine the corresponding public address from which it was generated. When a temporary address is deprecated, a new temporary address is generated. The specific valid and preferred lifetimes for the new address are dependent on the corresponding lifetime values in the public address.

Finally, this document assumes that when a node initiates outgoing communication, temporary addresses can be given preference over public addresses. This can mean that all connections initiated by the node use temporary addresses by default, or that applications individually indicate whether they prefer to use temporary or public addresses. Giving preference to temporary address is consistent with on-going work that addresses the topic of source-address selection in the more general case [ADDR_SELECT]. An implementation may make it a policy that it does not select a public address in the event that no temporary address is available (e.g., if generation of a useable temporary address fails).

### 3.2. Generation Of Randomized Interface Identifiers.

We describe two approaches for the maintenance of the randomized interface identifier. The first assumes the presence of stable storage that can be used to record state history for use as input into the next iteration of the algorithm across system restarts. A second approach addresses the case where stable storage is unavailable and there is a need to generate randomized interface identifiers without previous state.

### 3.2.1. When Stable Storage Is Present

The following algorithm assumes the presence of a 64-bit "history value" that is used as input in generating a randomized interface identifier. The very first time the system boots (i.e., out-of-the-box), a random value should be generated using techniques that help ensure the initial value is hard to guess [RANDOM]. Whenever a new interface identifier is generated, a value generated by the computation is saved in the history value for the next iteration of the algorithm.

A randomized interface identifier is created as follows:
1) Take the history value from the previous iteration of this algorithm (or a random value if there is no previous value) and append to it the interface identifier generated as described in [ADDRARCH].
2) Compute the MD5 message digest [MD5] over the quantity created in the previous step.
3) Take the left-most 64-bits of the MD5 digest and set bit 6 (the left-most bit is numbered 0) to zero. This creates an interface identifier with the universal/local bit indicating local significance only. Save the generated identifier as the associated randomized interface identifier.
4) Take the rightmost 64-bits of the MD5 digest computed in step 2) and save them in stable storage as the history value to be used in the next iteration of the algorithm.

MD5 was chosen for convenience, and because its particular properties were adequate to produce the desired level of randomization. lPv6 nodes are already required to implement MD5 as part of IPsec [IPSEC], thus the code will already be present on lPv6 machines.

In theory, generating successive randomized interface identifiers using a history scheme as above has no advantages over generating them at random. In practice, however, generating truly random numbers can be tricky. Use of a history value is intended to avoid the particular scenario where two nodes generate the same randomized interface identifier, both detect the situation via DAD, but then proceed to generate identical randomized interface identifiers via the same (flawed) random number generation algorithm. The above algorithm avoids this problem by having the interface identifier (which will often be globally unique) used in the calculation that generates subsequent randomized interface identifiers. Thus, if two nodes happen to generate the same randomized interface identifier, they should generate different ones on the followup attempt.

### 3.2.2. In The Absence of Stable Storage

In the absence of stable storage, no history value will be available across system restarts to generate a pseudo-random sequence of interface identifiers. Consequently, the initial history value used above will need to be generated at random. A number of techniques might be appropriate. Consult [RANDOM] for suggestions on good sources for obtaining random numbers. Note that even though machines may not have stable storage for storing a history value, they will in many cases have configuration information that differs from one machine to another (e.g., user identity, security keys, serial numbers, etc.). One approach to generating a random initial history value in such cases is to use the configuration information to generate some data bits (which may remain constant for the life of the machine, but will vary from one machine to another), append some random data and compute the MD5 digest as before.

### 3.3. Generating Temporary Addresses

[ADDRCONF] describes the steps for generating a link-local address when an interface becomes enabled as well as the steps for generating addresses for other scopes. This document extends [ADDRCONF] as follows. When processing a Router Advertisement with a Prefix Information option carrying a global-scope prefix for the purposes of address autoconfiguration (i.e., the A bit is set), perform the following steps:
1) Process the Prefix Information Option as defined in [ADDRCONF], either creating a public address or adjusting the lifetimes of existing addresses, both public and temporary. When adjusting the lifetimes of an existing temporary address, only lower the lifetimes. Implementations must not increase the lifetimes of an existing temporary address when processing a Prefix Information Option.
2) When a new public address is created as described in [ADDRCONF] (because the prefix advertised does not match the prefix of any address already assigned to the interface, and the Valid Lifetime in the option is not zero), also create a new temporary address.
3) When creating a temporary address, the lifetime values are derived from the corresponding public address as follows:
   - Its Valid Lifetime is the lower of the Valid Lifetime of the public address or TEMP_VALID_LIFETIME.
   - Its Preferred Lifetime is the lower of the Preferred Lifetime of the public address or TEMP_PREFERRED_LIFETIME-DESYNC_FACTOR.
   A temporary address is created only if this calculated Preferred Lifetime is greater than REGEN_ADVANCE time units. In particular, an implementation must not create a temporary address with a zero Preferred Lifetime.
4) New temporary addresses are created by appending the interface's current randomized interface identifier to the prefix that was used to generate the corresponding public address. If by chance the new temporary address is the same as an address already assigned to the interface, generate a new randomized interface identifier and repeat this step.
5) Perform duplicate address detection (DAD) on the generated temporary address. If DAD indicates the address is already in use, generate a new randomized interface identifier as described in Section 3.2 above, and repeat the previous steps as appropriate up to 5 times. If after 5 consecutive attempts no non-unique address was generated, log a system error and give up attempting to generate temporary addresses for that interface.
Note: because multiple temporary addresses are generated from the same associated randomized interface identifier, there is little benefit in running DAD on every temporary address. This document recommends that DAD be run on the first address generated from a given randomized identifier, but that DAD be skipped on all subsequent addresses generated from the same randomized interface identifier.

### 3.4. Expiration of Temporary Addresses

When a temporary address becomes deprecated, a new one should be generated. This is done by repeating the actions described in Section 3.3, starting at step 3). Note that, except for the transient period when a temporary address is being regenerated, in normal operation at most one temporary address corresponding to a public address should be in a non-deprecated state at any given time. Note that if a temporary address becomes deprecated as result of processing a Prefix Information Option with a zero Preferred Lifetime, then a new temporary address must not be generated. The Prefix Information Option will also deprecate the corresponding public address.

To insure that a preferred temporary address is always available, a new temporary address should be regenerated slightly before its predecessor is deprecated. This is to allow sufficient time to avoid race conditions in the case where generating a new temporary address is not instantaneous, such as when duplicate address detection must be run. It is recommended that an implementation start the address regeneration process REGEN_ADVANCE time units before a temporary address would actually be deprecated.

As an optional optimization, an implementation may wish to remove a deprecated temporary address that is not in use by applications or upper-layers. For TCP connections, such information is available in control blocks. For UDP-based applications, it may be the case that only the applications have knowledge about what addresses are actually in use. Consequently, one may need to use heuristics in deciding when an address is no longer in use (e.g., the default TEMP_VALID_LIFETIME suggested above).

### 3.5. Regeneration of Randomized Interface Identifiers

The frequency at which temporary addresses should change depends on how a device is being used (e.g., how frequently it initiates new communication) and the concerns of the end user. The most egregious privacy concerns appear to involve addresses used for long periods of time (weeks to months to years). The more frequently an address changes, the less feasible collecting or coordinating information keyed on interface identifiers becomes. Moreover, the cost of collecting information and attempting to correlate it based on interface identifiers will only be justified if enough addresses contain non-changing identifiers to make it worthwhile. Thus, having large numbers of clients change their address on a daily or weekly basis is likely to be sufficient to alleviate most privacy concerns.

There are also client costs associated with having a large number of addresses associated with a node (e.g., in doing address lookups, the need to join many multicast groups, etc.). Thus, changing addresses frequently (e.g., every few minutes) may have performance implications.

This document recommends that implementations generate new temporary addresses on a periodic basis. This can be achieved automatically by generating a new randomized interface identifier at least once every (TEMP_PREFERRED_LIFETIME - REGEN_ADVANCE - DESYNC_FACTOR) time units.

As described above, generating a new temporary address REGEN_ADVANCE time units before a temporary address becomes deprecated produces addresses with a preferred lifetime no larger than TEMP_PREFERRED_LIFETIME. The value DESYNC_FACTOR is a random value (different for each client) that ensures that clients don't synchronize with each other and generate new addresses at exactly the same time. When the preferred lifetime expires, a new temporary address is generated using the new randomized interface identifier.

Because the precise frequency at which it is appropriate to generate new addresses varies from one environment to another, implementations should provide end users with the ability to change the frequency at which addresses are regenerated. The default value is given in TEMP_PREFERRED_LIFETIME and is one day. In addition, the exact time at which to invalidate a temporary address depends on how applications are used by end users. Thus the default value given of one week (TEMP_VALID_LIFETIME) may not be appropriate in all environments. Implementations should provide end users with the ability to override both of these default values.

Finally, when an interface connects to a new link, a new randomized interface identifier should be generated immediately together with a new set of temporary addresses. If a device moves from one ethernet to another, generating a new set of temporary addresses from a different randomized interface identifier ensures that the device uses different randomized interface identifiers for the temporary addresses associated with the two links, making it more difficult to correlate addresses from the two different links as being from the same node.

### 4. Implications of Changing Interface Identifiers

The IPv6 addressing architecture goes to some lengths to ensure that interface identifiers are likely to be globally unique where easy to do so. During the IPng discussions of the GSE proposal [GSE], it was felt that keeping interface identifiers globally unique in practice might prove useful to future transport protocols. Usage of the algorithms in this document may complicate providing such a future flexibility.

The desires of protecting individual privacy vs. the desire to effectively maintain and debug a network can conflict with each other. Having clients use addresses that change over time will make it more difficult to track down and isolate operational problems. For example, when looking at packet traces, it could become more difficult to determine whether one is seeing behavior caused by a single errant machine, or by a number of them.

Some servers refuse to grant access to clients for which no DNS name exists. That is, they perform a DNS PTR query to determine the DNS name, and may then also perform an A query on the returned name to verify that the returned DNS name maps back into the address being used. Consequently, clients not properly registered in the DNS may be unable to access some services. As noted earlier, however, a node's DNS name (if non-changing) serves as a constant identifier.

The wide deployment of the extension described in this document could challenge the practice of inverse-DNS-based "authentication," which has little validity, though it is widely implemented. In order to meet server challenges, nodes could register temporary addresses in the DNS using random names (for example a string version of the random address itself).

Use of the extensions defined in this document may complicate debugging and other operational troubleshooting activities.

Consequently, it may be site policy that temporary addresses should not be used. Implementations may provide a method for a trusted administrator to override the use of temporary addresses.

### 5. Defined Constants

Constants defined in this document include:
TEMP_VALID_LIFETIME -- Default value: 1 week. Users should be able to override the default value.
TEMP_PREFERRED_LIFETIME - Default value: 1 day. Users should be able to override the default value.
REGEN_ADVANCE -- 5 seconds
MAX_DESYNC_FACTOR -- 10 minutes. Upper bound on DESYNC_FACTOR.
DESYNC_FACTOR -- A random value within the range 0 - MAX_DESYNC_FACTOR.
It is computed once at system start (rather than each time
it is used) and must never be greater than
(TEMP_VALID_LIFETIME - REGEN_ADVANCE).

### 6. Future Work

An implementation might want to keep track of which addresses are being used by upper layers so as to be able to remove a deprecated temporary address from internal data structures once no upper layer protocols are using it (but not before). This is in contrast to current approaches where addresses are removed from an interface when they become invalid [ADDRCONF], independent of whether or not upper layer protocols are still using them. For TCP connections, such information is available in control blocks. For UDP-based applications, it may be the case that only the applications have knowledge about what addresses are actually in use. Consequently, an implementation generally will need to use heuristics in deciding when an address is no longer in use (e.g., as is suggested in Section 3.4).

The determination as to whether to use public vs. temporary addresses can in some cases only be made by an application. For example, some applications may always want to use temporary addresses, while others may want to use them only in some circumstances or not at all. Suitable API extensions will likely need to be developed to enable individual applications to indicate with sufficient granularity their needs with regards to the use of temporary addresses.

### 7. Security Considerations

The motivation for this document stems from privacy concerns for individuals. This document does not appear to add any security issues beyond those already associated with stateless address autoconfiguration [ADDRCONF].

### 8. Acknowledgments

The authors would like to acknowledge the contributions of the IPNGWG working group and, in particular, Matt Crawford, Steve Deering and

Allison Mankin for their detailed comments.

### 9. References

[ADDRARCH] Hinden, R. and S. Deering, "IP Version 6 Addressing Architecture", RFC 2373, July 1998.
[ADDRCONF] Thomson, S. and T. Narten, "IPv6 Address Autoconfiguration", RFC 2462, December 1998.
[ADDR_SELECT] Draves, R. "Default Address Selection for IPv6", Work in Progress.
[COOKIES] Kristol, D. and L. Montulli, "HTTP State Management Mechanism", RFC 2965, October 2000.
[DHCP] Droms, R., "Dynamic Host Configuration Protocol", RFC 2131, March 1997.
[DDNS] Vixie, R., Thomson, S., Rekhter, Y. and J. Bound, "Dynamic Updates in the Domain Name System (DNS UPDATE)", RFC 2136, April 1997.
[DISCOVERY] Narten, T., Nordmark, E. and W. Simpson, "Neighbor Discovery for IP Version 6 (IPv6)", RFC 2461, December 1998.
[GSE] Crawford, et al., "Separating Identifiers and Locators in Addresses: An Analysis of the GSE Proposal for IPv6", Work in Progress.
[IPSEC] Kent, S., Atkinson, R., "Security Architecture for the Internet Protocol", RFC 2401, November 1998.
[MD5] Rivest, R., "The MD5 Message-Digest Algorithm", RFC 1321, April 1992.
[MOBILEIP] Perkins, C., "IP Mobility Support", RFC 2002, October 1996.
[RANDOM] Eastlake 3rd, D., Crocker S. and J. Schiller, "Randomness Recommendations for Security", RFC 1750, December 1994.
[SERIALNUM] Moore, K., "Privacy Considerations for the Use of Hardware Serial Numbers in End-to-End Network Protocols", Work in Progress.

### 11. Full Copyright Statement

Copyright (C) The Internet Society (2001). All Rights Reserved. This document and translations of it may be copied and furnished to others, and derivative works that comment on or otherwise explain it or assist in its implementation may be prepared, copied, published and distributed, in whole or in part, without restriction of any kind, provided that the above copyright notice and this paragraph are included on all such copies and derivative works. However, this document itself may not be modified in any way, such as by removing the copyright notice or references to the Internet Society or other Internet organizations, except as needed for the purpose of developing Internet standards in which case the procedures for copyrights defined in the Internet Standards process must be followed, or as required to translate it into languages other than English.

Annex B is the draft IETF SIP-SEC-AGREEMENT document. This internet draft describes the Security-Client header that might be used to carry the value of prefix length between UE and proxy. According to this document, new "extension parameters" can be added to the header, like the one proposed in embodiments of the invention.

### Annex B

Security Mechanism Agreement for SIP Sessions Status of this memo

This document is an Internet-Draft and is in full conformance with all provisions of Section 10 of RFC2026.

### Abstract

SIP has a number of security mechanisms. Some of them have been built in to the SIP protocol, such as HTTP authentication or secure attachments. These mechanisms have even alternative algorithms and parameters. SIP does not currently provide any mechanism for selecting which security mechanisms to use between two entities. In particular, even if some mechanisms such as OPTIONS were used to make this selection, the selection would be vulnerable against the Bidding-Down attack. This document defines three header fields for negotiating the security mechanisms within SIP between a SIP entity and its next SIP hop. A SIP entity applying this mechanism must always require some minimum security (i.e. integrity protection) from all communicating parties in order to secure the negotiation, but the negotiation can agree on which specific security is used.

### 1. Introduction

Traditionally, security protocols have included facilities to agree on the used mechanisms, algorithms, and other security parameters. The reason for this is that algorithm development typically uncovers problems in old algorithms and sometimes even produces new problems. Furthermore, different mechanisms and algorithms are suitable for different situations. Typically, protocols also select other parameters beyond algorithms at the same time.

The purpose of this specification is to define a similar negotiation functionality in SIP [1]. SIP has some security functionality built-in (e.g. HTTP Digest authentication [4]), it can utilize secure attachments (e.g. S/MIME [5]), and it can also use underlying security protocols (e.g. IPsec/IKE [2] or TLS [3]). Some of the built-in security functionality allows also alternative algorithms and other parameters. While some work within the SIP Working Group has been looking towards reducing the number of recommended security solutions (i.e., recommend just one lower layer security protocol), we can not expect to cut down the number of items in the whole list to one. There will still be multiple security solutions utilized by SIP. Furthermore, it is likely that new methods will appear in the future, to complement the methods that exist today.

Chapter 2 shows that without a secured method to choose between security mechanisms and/or their parameters, SIP is vulnerable to certain attacks. As the HTTP authentication RFC [4] points out, authentication and integrity protection using multiple alternative methods and algorithms is vulnerable to Man-in-the-Middle (MitM) attacks. More seriously, it is hard or sometimes even impossible to know whether a SIP peer entity is truly unable to perform (e.g., Digest, TLS, or S/MIME) or if a MitM attack is in action. In small networks consisting of workstations and servers these issues are not very relevant, as the administrators can deploy appropriate software versions and set up policies for using exactly the right type of security. However, SIP will be deployed to hundreds of millions of small devices with little or no possibilities for coordinated security policies, let alone software upgrades, and this makes these issues much worse. This conclusion is also supported by the requirements from 3GPP [7].

Chapter 6 documents the proposed solution, and chapter 7 gives some demonstrative examples.

### 2. Problem Description

SIP has alternative security mechanisms such as HTTP authentication with integrity protection, lower layer security protocols, and S/MIME. It is likely that their use will continue in the future. SIP security is developing, and is likely to see also new solutions in the future.

Deployment of large number of SIP-based consumer devices such as 3GPP terminals requires all network devices to be able to accommodate past, current and future mechanisms; there is no possibility for instantaneous change since the new solutions are coming gradually in as new standards and product releases occur. It is sometimes even impossible to upgrade some of the devices without getting completely new hardware.

So, the basic security problem that such a large SIP-based network must consider, would be on how do security mechanisms get selected?

It would be desirable to take advantage of new mechanisms as they become available in products.

Firstly, we need to know somehow what security should be applied, and preferably find this out without too many additional roundtrips.

Secondly, selection of security mechanisms MUST be secure.

Traditionally, all security protocols use a secure form of negotiation. For instance, after establishing mutual keys through Diffie-Hellman, IKE sends hashes of the previously sent dataincluding the offered crypto mechanisms. This allows the peers to detect if the initial, unprotected offers were tampered with.

The security implications of this are subtle, but do have a fundamental importance in building large networks that change over time. Given that the hashes are produced also using algorithms agreed in the first unprotected messages, one could ask what the difference in security really is. Assuming integrity protection is mandatory and only secure algorithms are used, we still need to prevent MitM attackers from modifying other parameters, such as whether encryption is provided or not. Let us first assume two peers capable of using both strong and weak security. If the initial offers are not protected in any way, any attacker can easily "downgrade" the offers by removing the strong options. This would force the two peers to use weak security between them. But if the offers are protected in some way -- such as by hashing, or repeating them later when the selected security is really on -- the situation is different. It would not be sufficient for the attacker to modify a single message. Instead, the attacker would have to modify both the offer message, as well as the message that contains the hash/repetition. More importantly, the attacker would have to forge the weak security that is present in the second message, and would have to do so in real time between the sent offers and the later messages. Otherwise, the peers would notice that the hash is incorrect. If the attacker is able to break the weak security, the security method and/or the algorithm should not be used.

In conclusion, the security difference is making a trivial attack possible versus demanding the attacker to break algorithms. An example of where this has a serious consequence is when a network is first deployed with integrity protection (such as HTTP Digest [4]), and then later new devices are added that support also encryption (such as S/MIME [1]). In this situation, an insecure negotiation procedure allows attackers to trivially force even new devices to use only integrity protection.

### 3. Solution

### 3.1 Requirements

The solution to the SIP security negotiation problem should have the following properties:
(a) It allows the selection of security mechanisms, such as lower layer security protocols or HTTP digest. It also allows the selection of individual algorithms and parameters when the security functions are integrated in SIP (such as in the case of HTTP authentication).
(b) It allows next-hop security negotiation.
(c) It is secure (i.e., prevents the bidding down attack.)
(d) It is capable of running without additional roundtrips. This is important in the cellular environment, where link delays are relatively high, and an additional roundtrip could delay the call set up further.
(e) It does not introduce any additional state to servers and proxies.
   Currently, SIP does not have any mechanism which fulfills all the requirements above. The basic SIP features such as OPTIONS and Require, Supported headers are capable of informing peers about various capabilities including security mechanisms. However, the straight forward use of these features can not guarantee a secured agreement. HTTP Digest algorithm lists [4] are not secure for picking among the digest integrity algorithms, as is described in the HTTP authentication RFC [4] itself. More seriously, they have no provisions for allowing encryption to be negotiated. Hence, it would be hard to turn on possible future encryption schemes in a secure manner.
   A self-describing security mechanism is a security mechanism that, when used, contains all necessary information about the method being used as well as all of its parameters such as algorithms.
   A non-self-describing security mechanism is a security mechanism that, when used, requires that the use of the method or some of its parameters have been agreed beforehand.
   Most security mechanisms used with SIP are self-describing. The use of HTTP digest, as well as the chosen algorithm is visible from the HTTP authentication headers. The use of S/MIME is indicated by the MIME headers, and the CMS structures inside S/MIME describe the used algorithms. TLS is run on a separate port in SIP, and where IPsec/IKE is used, IKE negotiates all the necessary parameters.
   The only exception to this list is the use of manually keyed IPsec.
   IPsec headers do not contain information about the used algorithms. Furthermore, peers have to set up IPsec Security Associations before they can be used to receive traffic. In contrast S/MIME can be received even if no Security Association was in place, because the application can search for a Security Association (or create a new one) after having received a message that contains S/MIME.
   In order to make it possible to negotiate both self-describing and non-self-describing security mechanisms, we need another requirement on the security agreement scheme:
(f) The security agreement scheme must allow both sides to decide on the desired security mechanism before it is actually used.
This decision can, and must, take place on both sides before we can be sure that the negotiation has not been tampered by a man-in-the-middle. This tampering will be detected later.

### 3.2. Overview of Operations

The message flow below illustrates how the mechanism defined in this document works:
1. Client ----------client list-----> Server
2. Client <-----server list---------- Server
3. Client ------(turn on security)----- Server
4. Client -----server list-----> Server
5. Client <----- ok or error---------- Server

### Figure 1: Security negotiation message flow

Step 1: Clients wishing to use this specification can send a list of their supported security mechanisms along the first request to the server.
Step 2: Servers wishing to use this specification can challenge the client to perform the security agreement procedure. The security mechanisms and parameters supported by the server are sent along in this challenge.
Step 3: The client then proceeds to select the highest-preference security mechanism they have in common and to turn on the selected security.
Step 4: The client contacts the server again, now using the selected security mechanism. The server's list of supported security mechanisms is returned as a response to the challenge.
Step 5: The server verifies its own list of security mechanisms in order to ensure that the original list had not been modified.
This procedure is stateless for servers (unless the used security mechanisms require the server to keep some state).
The client and the server lists are both static (i.e., they do not and cannot change based on the input from the other side). Nodes may, however, maintain several static lists, one for each interface, for example.
Between Steps 1 and 2, the server may set up a non-self-describing security mechanism if necessary. Note that with this type of security mechanisms, the server is necessarily stateful. The client would set up the non-self-describing security mechanism between Steps 2 and 4. 3.3. Syntax
We define three new SIP header fields, namely Security-Client, Security-Server and Security-Verify. Their BNF syntax is provided below:
security-client = "Security-Client" HCOLON
   sec-mechanism *(COMMA sec-mechanism)
security-server = "Security-Server" HCOLON
   sec-mechanism *(COMMA sec-mechanism)
security-verify = "Security-Verify" HCOLON
   sec-mechanism *(COMMA sec-mechanism)
sec-mechanism = mechanism-name *(SEMI mech-parameters)
mechanism-name = ( "digest-integrity" *l* "tls" / "ipsec-ike" /
   "ipsec-man" / "smime" / token)
mech-parameters = ( preference / algorithm / extension )
preference = "q" EQUAL qvalue
qvalue = ("0" ["." 0*3DIGIT ] )
   / ("1" ["." 0*3("0") ] )
algorithm = "alg" EQUAL token
extension = generic-param
Note that qvalue is already defined in the SIP BNF [1]. We have copied its definitions here for completeness.

The parameters described by the BNF above have the following semantics:
Mechanism-name: It identifies the security mechanism supported by the client, when it appears in a Security-Client header fields, or by the server, when it appears in a Security-Server or in a
Security-Verify header field. This specification defines five values:
   - "tls" for TLS [3].
   - "digest-integrity" for HTTP Digest [4] using additional integrity protection for the Security-Verify header field. The additional integrity protection consists of using the qop parameter to protect a MIME body (e.g., "message/sip") that contains the Security-Verify header field.
   - "ipsec-ike" for IPsec with IKE [2].
   - "ipsec-man" for manually keyed IPsec without IKE.
   - "smime" for S/MIME [5].

Preference: The "q" value indicates a relative preference for the particular mechanism. The higher the value the more preferred the mechanism is. All the security mechanisms MUST have different "q" values. It is an error to provide two mechanisms with the same "q" value.

Algorithm: An optional algorithm field for those security mechanisms which are not self-describing or which are vulnerable for bidding-down attacks (e.g., HTTP Digest). In the case of HTTP Digest, the same rules apply as defined in RFC 2617 [4] for the "algorithm" field in HTTP Digest.

### 3.4. Protocol Operation

This section deals with the protocol details involved in the negotiation between a SIP entity and its next-hop SIP entity. Throughout the text the next-hop SIP entity is referred to as the first-hop proxy or outbound proxy. However, the reader should bear in mind that a user agent server can also be the next-hop for a proxy or, in absence of proxies, for a user agent client. Note as well that a proxy can also have an outbound proxy.

### 3.4.1 Client Initiated

A client wishing to establish some type of security with its first-hop proxy MUST add a Security-Client header field to a request addressed to this proxy (i.e., the destination of the request is the first-hop proxy). This header field contains a list of all the security mechanisms that the client supports. The client SHOULD NOT add preference parameters to this list. The client MUST add both a Require and Proxy-Require header field with the value "sec-agree" to its request.

The Security-Client header field is used by the server to include any necessary information in its response. For example, if digest-integrity is the chosen mechanism, the server includes an HTTP authentication challenge in the response. If S/MIME is chosen, the appropriate certificate is included.

A server receiving an unprotected request that contains a Require or Proxy-Require header field with the value "sec-agree" MUST challenge the client with a 494 (Security Agreement Required) response. The server MUST add a Security-Server header field to this response listing the security mechanisms that the server supports. The server MUST add its list to the response even if there are no common security mechanisms in the client's and server's lists. The serverÆs list MUST NOT depend on the contents of the client's list.

The server MUST compare the list received in the Security-Client header field with the list to be sent in the Security-Server header field. When the client receives this response, it will choose the common security mechanism with the highest "q" value. Therefore, the server MUST add the necessary information so that the client can initiate that mechanism (e.g., a WWW-Authenticate header field for digest-integrity).

When the client receives a response with a Security-Server header field, it MUST choose the security mechanism in the serverÆs list with the highest "q" value among all the mechanisms that are known to the client. Then, it MUST initiate that particular security mechanism as described in Section 3.5. This initiation may be carried out without involving any SIP message exchange (e.g., establishing a TLS connection).

If an attacker modified the Security-Client header field in the request, the server may not include in its response the information needed to establish the common security mechanism with the highest preference value (e.g., the WWW-authenticate header field is missing). A client detecting such a lack of information in the response MUST consider the current security negotiation process aborted, and MAY try to start it again by sending a new request with a Security-Client header field as described above.

All the subsequent SIP requests sent by the client to that server SHOULD make use of the security mechanism initiated in the previous step. These requests MUST contain a Security-Verify header field that mirrors the serverÆs list received previously in the Security-Server header field. These requests MUST also have both a Require and Proxy-Require header fields with the value "sec-agree".

The server MUST check that the security mechanisms listed in the Security-Verify header field of incoming requests correspond to its static list of supported security mechanisms.

Note that, following the standard SIP header field comparison rules defined in [1], both lists have to contain the same security mechanisms in the same order to be considered equivalent. In addition, for each particular security mechanism, its parameters in both lists need to have the same values.

The server can proceed processing a particular request if, and only if, the list was not modified. If modification of the list is detected, the server MUST challenge the client with a 494 (Security Agreement Required). This response MUST include a challenge with server's unmodified list of supported security mechanisms. If the list was not modified, and the server is a proxy, it MUST remove the "sec-agree" value from both the Require and Proxy-Require header fields, and then remove the header fields if no values remain.

Once the security has been negotiated between two SIP entities, the same SIP entities MAY use the same security when communicating with each other in different SIP roles. For example, if a UAC and its outbound proxy negotiate some security, they may try to use the same security for incoming requests (i.e., the UA will be acting as a UAS).

The user of a UA SHOULD be informed about the results of the security mechanism negotiation. The user MAY decline to accept a particular security mechanism, and abort further SIP communications with the peer.

### 3.4.2 Server Initiated

A server decides to use the security negotiation described in this document based on local policy. A server that decides to use this negotiation MUST challenge unprotected requests regardless of the presence or the absence of any Require, Proxy-Require or Supported header fields in incoming requests.

A server that by policy requires the use of this specification and receives a request that does not have the sec-agree option tag in a Require, Proxy-Require or Supported header field MUST return a 421 (Extension Required) response. If the request had the sec-agree option tag in a Supported header field, it MUST return a 494 (Security Agreement Required) response. In both situation the server MUST also include in the response a Security-Server header field listing its capabilities and a Require header field with an option-tag "sec-agree" in it. All the Via header field entries in the response except the topmost value MUST be removed. This ensures that the previous hop is the one processing the response (see example in Section 5.3).

Clients that support the extension defined in this document MAY add a Supported header field with a value of "sec-agree". In addition to this, clients SHOULD add a Security-Client header field so that they can save a round trip in case the server decides to challenge the request.

### 3.5. Security mechanism initiation

Once the client chooses a security mechanism from the list received in the Security-Server header field from the server, it initiates that mechanism. Different mechanisms require different initiation procedures.

If TLS is chosen, the client uses the procedures of Section 8.1.2 of [1] to determine the URI to be used as an input to the DNS procedures of [6]. However, if the URI is a sip URI, it MUST treat the scheme as if it were sips, not sip. If the URI scheme is not sip, the request MUST be sent using TLS.

If digest-integrity is chosen, the 494 (Security Agreement Required) response will contain an HTTP Digest authentication challenge. The client MUST use the qop parameter to protect a MIME body (e.g., "message/sip") that contains the Security-Verify header field in the request. Currently, only the qop value Æauth-intÆ is able to provide required protection. Note that digest alone without placing Security-Verify header in the body would not fulfill the minimum security requirements of this specification.

To use "ipsec-ike", the client attempts to establish an IKE connection to the host part of the Request-URI in the first request to the server. If the IKE connection attempt fails, the agreement procedure MUST be considered to have failed, and MUST be terminated. Note that "ipsec-man" will only work if the communicating SIP entities know which keys and other parameters to use. It is outside the scope of this specification to describe how this information can be made known to the peers.

In both IPsec-based mechanisms, it is expected that appropriate policy entries for protecting SIP have been configured or will be created before attempting to use the security agreement procedure, and that SIP communications use port numbers and addresses according to these policy entries. It is outside the scope of this specification to describe how this information can be made known to the peers, but it could be typically configured at the same time as the IKE credentials or manual SAs have been entered.

To use S/MIME, the client MUST construct its request using S/MIME. The client may have received the serverÆs certificate in an S/MIME body in the 494 (Security Agreement Required) response. Note that

S/MIME can only be used if the next hop SIP entity is a UA.

### 3.6. Duration of Security Associations

Once a security mechanism has been negotiated, both the server and the client need to know until when it can be used. All the mechanisms described in this document have a different way to signal the end of a security association. When TLS is used, the termination of the connection indicates that a new negotiation is needed. IKE negotiates the duration of a security association. If the credentials provided by a client using digest-integrity are not longer valid, the server will re-challenge the client. It is assumed that when IPsec-man is used, the same out-of-band mechanism used to distribute keys is used to define the duration of the security association.

### 3.7. Summary of Header Field Use

The header fields defined in this document may be used to negotiate the security mechanisms between a UAC and other SIP entities including UAS, proxy, and registrar. Information about the use of headers in relation to SIP methods and proxy processing is summarized in Table 1.

**Table 1: Summary of header usage.**

| Header field | where | proxy ACK BYE CAN INV OPT REG |
|---|---|---|
| - | | |
| Security-Client | R | ard - o - o o o |
| Security-Server | 401,407,421,494 - o - o o o | |
| Security-Verify | R | ard - o - o o o QQQQ |
| Header field | where | proxy SUB NOT PRK IFO UPD MSG |
| - | | |
| Security-Client | R | ard o o - o o o |
| Security-Server | 401,407,421,494 o o - o o o | |
| Security-Verify | R | ard o o - o o o |

The "where" column describes the request and response types in which the header field may be used. The header may not appear in other types of SIP messages. Values in the where column are:
- R: Header field may appear in requests.
- 401, 407 etc.: A numerical value or range indicates response codes with which the header field can be used.

The "proxy" column describes the operations a proxy may perform on a header field:
- a: A proxy can add or concatenate the header field if not present.
- r: A proxy must be able to read the header field, and thus this header field cannot be encrypted.
- d: A proxy can delete a header field value.

The next six columns relate to the presence of a header field in a method:
- o: The header field is optional.

### 4. Backwards Compatibility

A server that, by local policy, decides to use the negotiation mechanism defined in this document, will not accept requests from clients that do not support this extension. This obviously breaks interoperability with every plain SIP client. Therefore, this extension should be used in environments where it is somehow ensured that every client implements this extension. This extension may also be used in environments where insecure communication is not acceptable if the option of not being able to communicate is also accepted.

### 5. Examples

The following examples illustrate the use of the mechanism defined above.

### 5.1. Client Initiated

A UA negotiates the security mechanism to be used with its outbound proxy without knowing beforehand which mechanisms the proxy supports.

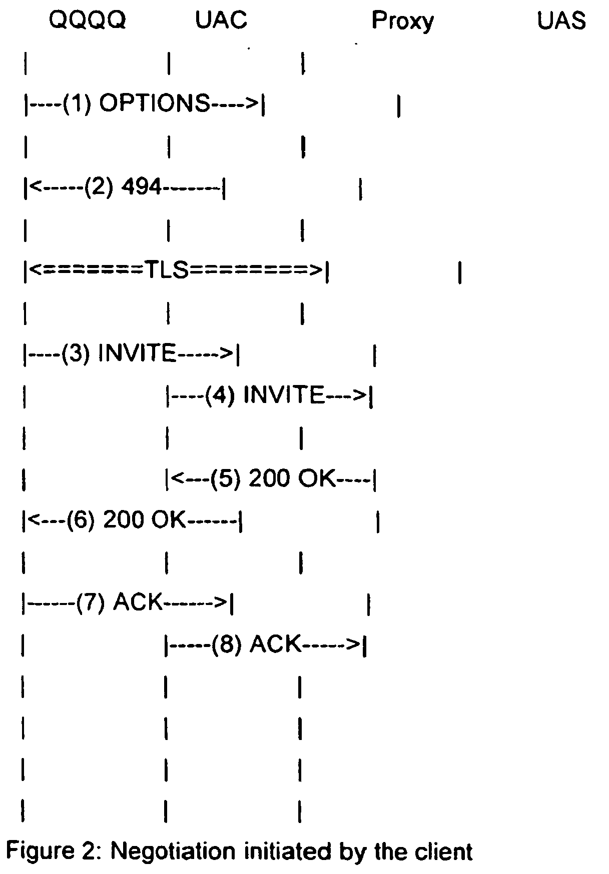

The UAC sends an OPTIONS request to its outbound proxy, indicating that it is able to negotiate security mechanisms and that it supports TLS and digest-integrity (Step 1 of figure 1). The outbound proxy challenges the UAC with its own list of security mechanisms û IPsec and TLS (Step 2 of figure 1). The only common security mechanism is TLS, so they establish a TLS connection between them (Step 3 of figure 1). When the connection is successfully established, the UAC sends an INVITE over the TLS connection just established (Step 4 of figure 1). This INVITE contains the serverÆs security list. The server verifies it, and since it matches its static list, it processes the INVITE and forwards it to the next hop.
If this example was run without Security-Server header in Step 2, the UAC would not know what kind of security the other one supports, and would be forced to error-prone trials.
More seriously, if the Security-Verify was omitted in Step 4, the whole process would be prone for MitM attacks. An attacker could spoof "ICMP Port Unreachable" message on the trials, or remove the stronger security option from the header in Step 1, therefore substantially reducing the security.
(1) OPTIONS sip:proxy.example.com SIP/2.0
   Security-Client: tls
   Security-Client: digest-integrity
   Require: sec-agree
   Proxy-Require: sec-agree
(2) SIP/2.0 494 Security Agreement Required Security-Server: ipsec-ike;q=0.1
   Security-Server: tls;q=0.2
(3) INVITE sip:proxy.example.com SIP/2.0
   Security-Verify: ipsec-ike;q=0.1
   Security-Verify: tls;q=0.2
   Route: sip:callee@domain.com
   Require: sec-agree
   Proxy-Require: sec-agree
The 200 OK response for the INVITE and the ACK are also sent over the TLS connection. The ACK (7) will contain the same Security-Verify header field as the INVITE (3).

### 5.2. Server Initiated

In this example of figure 3 the client sends an INVITE towards the callee using an outbound proxy. This INVITE does not contain any Require header field.

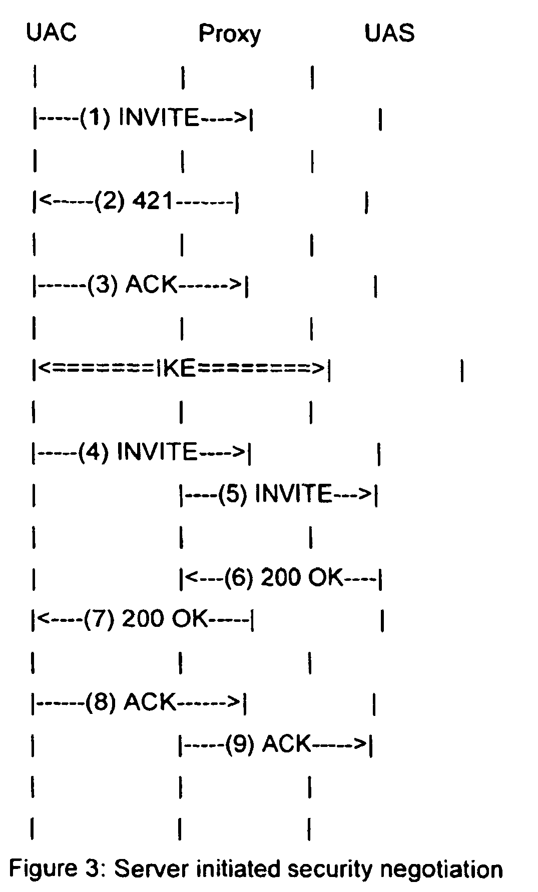

The proxy, following its local policy, challenges the INVITE. It returns a 421 (Extension Required) with a Security-Server header field that lists IPsec-IKE and TLS. Since the UAC supports IPsec-IKE it performs the key exchange and establishes a security association with the proxy. The second INVITE (4) and the ACK (8) contain a Security-Verify header field that mirrors the Security-Server header field received in the 421. The INVITE (4), the 200 OK (7) and the ACK (8) are sent using the security association that has been established.

### 5.3 Security Negotiation between Proxies

The example in Figure 4 shows a security negotiation between two adjacent proxies. P1 forwards an INVITE (2) to P2. P2, by policy, requires that a security negotiation takes place before accepting any request. Therefore, it challenges P1 with a 421 (Extension Required) response (3). P2 removes all the Via entries except the topmost one (i.e., P1) so that P1 itself processes the response rather than forwarding it to the UAC. This 421 response contains a Security-Server header field listing the server's capabilities and a Require header field with an option-tag "sec-agree" in it. P2 includes "TLS" and "ipsec-ike" in the Security-Server header field. P1 sends an ACK (4) for the response and proceeds to establish a TLS connection, since this is the only security mechanism supported by P1. Once the TLS connection is established, session establishment proceeds normally. Messages (5), (8) and (11) are sent using the just established TLS connection. Messages (5) and (11) contain a Security-Verify header field that P2 removes before forwarding them to the UAS. Note that, following normal SIP procedures, P1 uses a different branch ID for INVITE (5) than the one it used for INVITE (2).

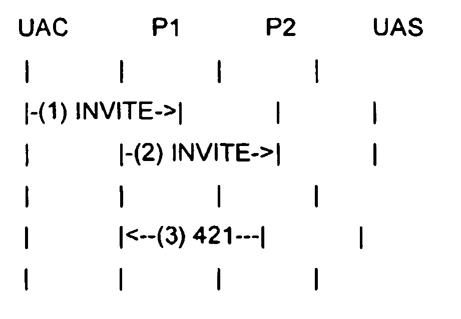

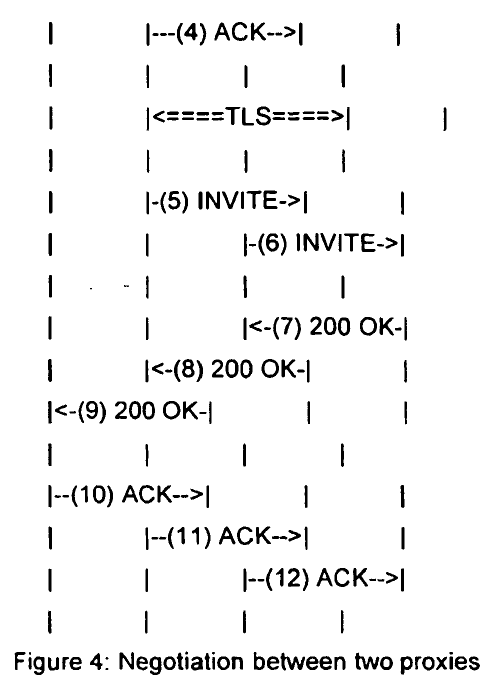

### 6. Security Considerations

This specification is about making it possible to select between various SIP security mechanisms in a secure manner. In particular, the method presented here allow current networks using, for instance, Digest, to be securely upgraded to, for instance, IPsec without requiring a simultaneous modification in all equipment. The method presented in this specification is secure only if the weakest proposed mechanism offers at least integrity protection.
Attackers could try to modify the server's list of security mechanisms in the first response. This would be revealed to the server when the client returns the received list using the security. Attackers could also try to modify the repeated list in the second request from the client. However, if the selected security mechanism uses encryption this may not be possible, and if it uses integrity protection any modifications will be detected by the server.

Finally, attackers could try to modify the client's list of security mechanisms in the first message. The client selects the security mechanism based on its own knowledge of its own capabilities and the server's list, hence the client's choice would be unaffected by any such modification. However, the server's choice could still be affected as described below:
- If the modification affected the server's choice, the server and client would end up choosing different security mechanisms in Step 3 or 4 of figure 1. Since they would be unable to communicate to each other, this would be detected as a potential attack. The client would either retry or give up in this situation.
- If the modification did not affect the server's choice, there's no effect.

All clients that implement this specification MUST select HTTP Digest with integrity, TLS, IPsec, or any stronger method for the protection of the second request.

### 9. Normative References

[1] J. Rosenberg, H. Schulzrinne, G. Camarillo, A. Johnston, J. Peterson, R. Sparks, M. Handley, E. Schooler "SIP: Session Initiation Protocol", Work in Progress, draft-ietf-sip-rfc2543bis-09.txt, IETF, February 2002.
[2] S. Kent, R. Atkinson, "Security Architecture for the Internet Protocol", RFC 2401, IETF, November 1998.
[3] T. Dierks, C. Allen, "The TLS Protocol Version 1.0", RFC 2246, IETF January 1999.
[4] Franks, J. et al, "HTTP Authentication: Basic and Digest Access Authentication", RFC 2617, IETF, June 1999.
[5] B. Ramsdell and Ed, "S/MIME version 3 message specification", RFC 2633, IETF, June 1999.
[6] H. Schulzrinne and J. Rosenberg, "SIP: Locating SIP servers", Work in Progress, draft-ietf-sip-srv-06.txt, IETF, February 2002.

## Claims

1. A method to set up a security association between a first node and a second node in a packet switched system, comprising the steps of:
forwarding a prefix value from the first node to the second node, said prefix value referring to a portion of the IP address associated with the first node; and
creating a security association between the first node and the second node based on the prefix value.

2. A method as claimed in claim 1, wherein the packet switched system is a IP Multimedia Subsystem of a 3rd generation network.

3. A method as claimed in claim 1 or 2 wherein the first node is User Equipment (1).

4. A method as claimed in any preceding claim, wherein the second node is a Proxy Call State Control Function entity (22).

5. A method as claimed in any preceding claim, wherein the step of forwarding a prefix value from the first node to the second node, comprises forwarding the prefix value in a message.

6. A method as claimed in claim 5, wherein the message is a protocol message.

7. A method as claimed in claim 6, wherein the protocol is a Session Initiation Protocol.

8. A method as claimed in any of claims 5 to 7, wherein the message is a Session Initiation Protocol REGISTER message.

9. A method as claimed in any of claims 5 to 8, wherein the prefix value is included in a header of the message.

10. A method as claimed in claim 9, wherein the header is a Security-Client header.

11. A method as claimed in claim 10, wherein the prefix value is included in an extension parameter of the Security-Client header.

12. A method as claimed in any preceding claim, wherein the prefix value has a first value if there is only one IP address or a second value if there is a plurality of IP addresses.

13. A method as claimed in any preceding claim, wherein the prefix value is allocated by a Gateway GPRS Support Node.

14. A system comprising a first node and a second node in a packet switched system, wherein the first node is arranged to forward its prefix value in a message to the second node, said prefix value referring to a portion of the IP address of the first node, and wherein the second node is arranged to create a security association with the first node based on the prefix value.

15. A system as claimed in claim 14, wherein the packet switched system is a IP Multimedia Subsystem of a 3rd generation network.

16. A system as claimed in claim 14 or 15, wherein the first node is User Equipment (1).

17. A system as claimed in any of claims 14 to 16, wherein the second node is a Proxy Call State Control Function entity (22).

18. A system as claimed in any of claims 14 to 17, wherein the message is a protocol message.

19. A system as claimed in claim 18, wherein the protocol is Session Initiation Protocol.

20. A system as claimed in any of claims 14 to 19, wherein the message is a REGISTER message.

21. A system as claimed in any of claims 14 to 20, wherein the prefix value is included in a header of the message.

22. A system as claimed in claim 21, wherein the header is a Security-Client header

23. A system as claimed in claim 22, wherein the prefix value is included in an extension parameter of the Security-Client header.

24. A system as claimed in any of claims 14 to 23, wherein the prefix value has a first value if the security association has one IP address only and a second value if the security association has a range of IP addresses.

25. A system as claimed in any of claims 16 or any claim appended thereto, comprising a Gateway GPRS Support Node adapted to allocate the prefix value to the User Equipment (1).

## Patentansprüche

1. Verfahren zum Einrichten einer Sicherheitsassoziation zwischen einem ersten Knoten und einem zweiten Knoten in einem paketvermittelten System, mit den Schritten:
Weiterleiten eines Präfixwerts von dem ersten Knoten an den zweiten Knoten, wobei sich der Präfixwert auf einen Teil der IP-Adresse bezieht, die mit dem ersten Knoten verknüpft ist; und
Erzeugen einer Sicherheitsassoziation zwischen dem ersten Knoten und dem zweiten Knoten basierend auf dem Präfixwert.

2. Verfahren gemäß Anspruch 1, wobei das paketvermittelte System ein IP-Multimedia-Subsystem von einem Netzwerk der dritten Generation ist.

3. Verfahren gemäß Anspruch 1 oder 2, wobei der erste Knoten eine Benutzervorrichtung (1) ist.

4. Verfahren gemäß einem der vorhergehenden Ansprüche, wobei der zweite Knoten eine Proxy-Rufzustandssteuerfunktion-Instanz (22) ist.

5. Verfahren gemäß einem der vorhergehenden Ansprüche, wobei der Schritt zum Weiterleiten eines Präfixwerts von dem ersten Knoten an den zweiten Knoten ein Weiterleiten des Präfixwerts in einer Nachricht umfasst.

6. Verfahren gemäß Anspruch 5, wobei die Nachricht eine Protokollnachricht ist.

7. Verfahren gemäß Anspruch 6, wobei das Protokoll ein Sitzungseinleitungsprotokoll ist.

8. Verfahren gemäß einem der Ansprüche 5 bis 7, wobei die Nachricht eine REGISTER-Nachricht des Sitzungseinleitungsprotokolls ist.

9. Verfahren gemäß einem der Ansprüche 5 bis 8, wobei der Präfixwert in einem Kopffeld der Nachricht enthalten ist.

10. Verfahren gemäß Anspruch 9, wobei das Kopffeld ein Sicherheitsclient-Kopffeld ist.

11. Verfahren gemäß Anspruch 10, wobei der Präfixwert in einem Erweiterungsparameter des Sicherheitsclient-Kopffelds enthalten ist.

12. Verfahren gemäß einem der vorhergehenden Ansprüche, wobei der Präfixwert einen ersten Wert aufweist, falls nur eine IP-Adresse vorliegt, oder einen zweiten Wert aufweist, falls eine Vielzahl von IP-Adressen vorliegt.

13. Verfahren gemäß einem der vorhergehenden Ansprüche, wobei der Präfixwert durch einen Gateway-GPRS-Unterstützungsknoten zugewiesen wird.

14. System mit einem ersten Knoten und einem zweiten Knoten in einem paketvermittelten System, bei dem der erste Knoten zum Weiterleiten seines Präfixwerts in einer Nachricht an den zweiten Knoten eingerichtet ist, wobei sich der Präfixwert auf einen Teil der IP-Adresse des ersten Knotens bezieht, und bei dem der zweite Knoten zum Erzeugen einer Sicherheitsassoziation mit dem ersten Knoten basierend auf dem Präfixwert eingerichtet ist.

15. System gemäß Anspruch 14, wobei das paketvermittelte System ein IP-Multimedia-Subsystem von einem Netzwerk der dritten Generation ist.

16. System gemäß Anspruch 14 oder 15, wobei der erste Knoten eine Benutzervorrichtung (1) ist.

17. System gemäß einem der Ansprüche 14 bis 16, wobei der zweite Knoten eine Proxy-Rufzustandssteuerfunktion-Instanz (22) ist.

18. System gemäß einem der Ansprüche 14 bis 17, wobei die Nachricht eine Protokollnachricht ist.

19. System gemäß Anspruch 18, wobei das Protokoll ein Sitzungseinleitungsprotokoll ist.

20. System gemäß einem der Ansprüche 14 bis 19, wobei die Nachricht eine REGISTER-Nachricht ist.

21. System gemäß einem der Ansprüche 14 bis 20, wobei der Präfixwert in einem Kopffeld der Nachricht enthalten ist.

22. System gemäß Anspruch 21, wobei das Kopffeld ein Sicherheitsclient-Kopffeld ist.

23. System gemäß Anspruch 22, wobei der Präfixwert in einem Erweiterungsparameter des Sicherheitsclient-Kopffelds enthalten ist.

24. System gemäß einem der Ansprüche 14 bis 23, wobei der Präfixwert einen ersten Wert aufweist, falls die Sicherheitsassoziation nur eine IP-Adresse aufweist, und einen zweiten Wert aufweist, falls die Sicherheitsassoziation eine Auswahl an IP-Adressen aufweist.

25. System gemäß Anspruch 16 oder einem an diesen angehängten Anspruch, mit einem Gateway-GPRS-Unterstützungsknoten, der zum Zuweisen des Präfixwerts an die Benutzervorrichtung (1) angepasst ist.

## Revendications

1. Procédé pour établir une association de sécurité entre un premier noeud et un second noeud dans un système à commutation de paquet, comprenant les étapes consistant à :
acheminer une valeur de préfixe du premier noeud vers le second noeud, ladite valeur de préfixe se référant à une portion de l'adresse IP associée au premier noeud ; et
créer une association de sécurité entre le premier noeud et le second noeud sur la base de la valeur de préfixe.

2. Procédé selon la revendication 1, dans lequel le système à commutation de paquet est un sous-système multimédia IP d'un réseau de troisième génération.

3. Procédé selon la revendication 1 ou 2, dans lequel le premier noeud est un équipement utilisateur (1).

4. Procédé selon l'une quelconque des revendications précédentes, dans lequel le second noeud est une entité de fonction de commande d'état d'appel par proxy (22).

5. Procédé selon l'une quelconque des revendications précédentes, dans lequel l'étape consistant à acheminer une valeur de préfixe du premier noeud vers le second noeud comprend l'acheminement de la valeur de préfixe dans un message.

6. Procédé selon la revendication 5, dans lequel le message est un message de protocole.

7. Procédé selon la revendication 6, dans lequel le protocole est un protocole d'ouverture de session.

8. Procédé selon l'une quelconque des revendications 5 à 7, dans lequel le message est un message REGISTRE de protocole d'ouverture de session.

9. Procédé selon l'une quelconque des revendications 5 à 8, dans lequel la valeur de préfixe est incluse dans un en-tête du message.

10. Procédé selon la revendication 9, dans lequel l'en-tête est un en-tête de sécurité client.

11. Procédé selon la revendication 10, dans lequel la valeur de préfixe est incluse dans un paramètre d'extension de l'en-tête de sécurité client.

12. Procédé selon l'une quelconque des revendications précédentes, dans lequel la valeur de préfixe a une première valeur s'il n'existe qu'une adresse IP ou une seconde valeur s'il existe une pluralité d'adresses IP.

13. Procédé selon l'une quelconque des revendications précédentes, dans lequel la valeur de préfixe est attribuée par un noeud de service GPRS de passerelle.

14. Système comprenant un premier noeud et un second noeud dans un système à commutation de paquet, dans lequel le premier noeud est agencé pour acheminer sa valeur de préfixe dans un message vers le second noeud, ladite valeur de préfixe se référant à une portion de l'adresse IP du premier noeud, et dans lequel le second noeud est agencé pour créer une association de sécurité avec le premier noeud sur la base de la valeur de préfixe.

15. Système selon la revendication 14, dans lequel le système à commutation de paquet est un sous-système multimédia IP d'un réseau de troisième génération.

16. Système selon la revendication 14 ou 15, dans lequel le premier noeud est un équipement utilisateur (1).

17. Système selon l'une quelconque des revendications 14 à 16, dans lequel le second noeud est une entité de fonction de commande d'état d'appel par proxy (22).

18. Système selon l'une quelconque des revendications 14 à 17, dans lequel le message est un message de protocole.

19. Système selon la revendication 18, dans lequel le protocole est un protocole d'ouverture de session.

20. Système selon l'une quelconque des revendications 14 à 19, dans lequel le message est un message REGISTRE.

21. Système selon l'une quelconque des revendications 14 à 20, dans lequel la valeur de préfixe est incluse dans un en-tête de message.

22. Système selon la revendication 21, dans lequel l'en-tête est un en-tête de sécurité client.

23. Système selon la revendication 22, dans lequel la valeur de préfixe est incluse dans un paramètre d'extension de l'en-tête de sécurité client.

24. Système selon l'une quelconque des revendications 14 à 23, dans lequel la valeur de préfixe a une première valeur si l'association de sécurité ne comporte qu'une adresse IP et une seconde valeur si l'association de sécurité comporte une gamme d'adresses IP.

25. Système selon l'une quelconque des revendications 16 à 24, comprenant un noeud de service GPRS de passerelle adapté pour attribuer la valeur de préfixe à l'équipement utilisateur (1).
